# EUROPEAN PATENT SPECIFICATION

(11) **EP 3 755 100 B1**
(45) Date of publication and mention of the grant of the patent: **09.10.2024**
(21) Application number: 19780802.5
(22) Date of filing: 02.04.2019
(51) Int. Cl.: H04W 72/23

(54) **COMMUNICATION METHOD AND COMMUNICATION DEVICE**
KOMMUNIKATIONSVERFAHREN UND KOMMUNIKATIONSGERÄT
PROCÉDÉ DE COMMUNICATION ET DISPOSITIF DE COMMUNICATION

(30) Priority: 04.04.2018 CN 201810301018
(43) Date of publication of application: 23.12.2020
(73) Proprietor: Huawei Technologies Co., Ltd., Longgang Shenzhen, Guangdong 518129 (CN)
(72) Inventor: LI, Shengyu, Shenzhen, Guangdong 518129 (CN); GUAN, Lei, Shenzhen, Guangdong 518129 (CN); HU, Dan, Shenzhen, Guangdong 518129 (CN); LYU, Yongxia, Shenzhen, Guangdong 518129 (CN)
(74) Representative: Grünecker Patent- und Rechtsanwälte PartG mbB
(86) International application number: PCT/CN2019/081089
(87) International publication number: WO 2019/192500

(56) References cited:
- EP-A1- 3 127 389
- EP-B1- 3 127 389
- WO-A1-2014/098701
- WO-A1-2018/019085
- CN-A- 104 919 878
- CN-A- 104 955 156
- CN-A- 107 295 674
- US-A1- 2015 334 685
- "URLLC System Capacity and URLLC/eMBB Multiplexing Efficiency Analysis", 3GPP TSG-RAN WG1 #86-BIS RL-1610188, 1 October 2016 (2016-10-01), XP051159988

## Description

### TECHNICAL FIELD

Embodiments of this application relate to the communications field, and more specifically, to a communication method and a communications apparatus.

### BACKGROUND

With development of communications technologies, some services such as ultra-reliable low-latency communication (Ultra-reliable low latency communication, URLLC) services have a relatively high requirement for a transmission latency. WO 2014/098701 A1 discloses a method in a network node for handling scheduling of a wireless device in a communications network. The network node is adapted to communicate wirelessly with the wireless device over a radio channel. The network node determines that a data transmission or data reception corresponding to a multi-TTI scheduling message previously transmitted to the wireless device should be at least one of adjusted, interrupted and terminated. The network node transmits, to the wireless device, information indicating that the data transmission or data reception corresponding to a previously transmitted multi- Transmission Time Interval, TTI, scheduling message should be at least one of adjusted, interrupted and terminated as determined.

To meet the requirement of the URLLC service for the transmission latency, the URLLC service may be transmitted by occupying another time-frequency resource that has been allocated to a service (a victim service) having a relatively low requirement for a latency.

In this case, the same time-frequency resource may be used for transmission of the URLLC service and the victim service. Consequently, the URLLC service and the victim service interfere with each other, and communication accuracy and reliability are reduced.

### SUMMARY

This application provides a communication method according to claim 1, to improve communication accuracy and reliability.

According to a first aspect, a communication method is provided, including: receiving, by a terminal device, first scheduling information for scheduling first uplink transmission, where the first scheduling information includes interruption indication information, and the interruption indication information is used to indicate the terminal device to interrupt second uplink transmission; and interrupting, by the terminal device, the second uplink transmission based on the interruption indication information.

According to the communication method in this application, when a gNB determines that a time-frequency resource #1 needs to be used to transmit a service #1, the gNB may send scheduling information to UE that accesses a service #2. The scheduling information may be used to indicate the UE to interrupt uplink transmission on a time-frequency resource #2, where the time-frequency resource #2 and the time-frequency resource #1 have an overlapping part. Therefore, interference to transmission of the service #1 can be avoided, and communication accuracy and reliability can be improved.

Optionally, the first scheduling information includes downlink control information DCI.

The first scheduling information is used to schedule uplink transmission.

Optionally, the first scheduling information is a UL grant.

Optionally, the interruption indication information is a predefined bit sequence.

Optionally, the first scheduling information includes an interruption indication field carrying the interruption indication information, and the interrupting, by the terminal device, the second uplink transmission based on the interruption indication information includes: interrupting, by the terminal device, the second uplink transmission when determining that a bit sequence in the interruption indication field is a first sequence, where the first sequence is a bit sequence corresponding to the interruption indication information.

Optionally, the bit sequence includes at least one bit.

Optionally, the first sequence is a predefined bit sequence.

Optionally, the first sequence is a bit sequence indicated by a network device.

When a first time-frequency resource corresponding to the first uplink transmission overlaps a second time-frequency resource corresponding to the second uplink transmission, the interruption indication information is further used to indicate the terminal device to interrupt the first uplink transmission.

When the first time-frequency resource corresponding to the first uplink transmission does not overlap the second time-frequency resource corresponding to the second uplink transmission, the method further includes: performing, by the terminal device, the first uplink transmission on the first time-frequency resource based on the first scheduling information.

Optionally, a first transmission parameter of the second uplink transmission is the same as a first transmission parameter of the first uplink transmission.

Optionally, the first transmission parameter includes one or more of the following parameters: a hybrid automatic repeat request HARQ identifier ID, a new data indicator NDI, a modulation and coding scheme MCS, a redundancy version RV identifier ID, and a bit in a channel state information CSI request field. For example, the first transmission parameter is the hybrid automatic repeat request HARQ identifier ID, the new data indicator NDI, the modulation and coding scheme MCS, the redundancy version RV identifier ID, or the bit in the channel state information CSI request field.

Optionally, when the first transmission parameter includes Z types of parameters, that a first transmission parameter of the second uplink transmission is the same as a first transmission parameter of the first uplink transmission may be: an i^{th} type of parameter of the second uplink transmission is the same as an i^{th} type of parameter of the first uplink transmission, where i∈[1, Z] and Z is an integer greater than or equal to 2.

Optionally, the first transmission parameter includes the HARQ ID and the NDI.

In this case, the second uplink transmission and the first uplink transmission have a same HARQ ID, and an NDI of the first uplink transmission is untoggled compared with an NDI of the second uplink transmission.

Optionally, the second uplink transmission is uplink transmission scheduled based on a last piece of scheduling information that the terminal device receives before receiving the first scheduling information.

Optionally, the second uplink transmission is uplink transmission scheduled based on all pieces of scheduling information that the terminal device receives before receiving the first scheduling information.

Optionally, the second time-frequency resource corresponding to the second uplink transmission and the first time-frequency resource corresponding to the first uplink transmission have an overlapping part.

Optionally, that the second time-frequency resource and the first time-frequency resource have an overlapping part may have any one of the following meanings:
Meaning 1: The first time-frequency resource partially or completely overlaps the second time-frequency resource in time domain, but the first time-frequency resource does not overlap the second time-frequency resource at all in frequency domain.
   That the first time-frequency resource partially or completely overlaps the second time-frequency resource in time domain means that a time unit in which the first time-frequency resource is located partially or completely overlaps a time unit in which the second time-frequency resource is located. The time unit may be any one of a symbol (an OFDM symbol), a mini-slot, a slot, and a subframe.
Meaning 2: The first time-frequency resource partially or completely overlaps the second time-frequency resource in frequency domain, but the first time-frequency resource does not overlap the second time-frequency resource at all in time domain.
Meaning 3: The first time-frequency resource partially or completely overlaps the second time-frequency resource in both time domain and frequency domain.

According to the invention, a communications device is provided, including means to perform the communication method according to the first aspect.

Optionally, there are one or more processors and one or more memories.

Optionally, the memory and the processor may be integrated, or may be separately disposed.

Optionally, the communications device further includes a transmitter (transmitter) and a receiver (receiver).

According to the invention, a computer-readable medium is provided. The computer-readable medium stores a computer program (which may also be referred to as code or an instruction). When the computer program is run on a computer, the computer is enabled to perform the method according to the first aspect.

In the solutions of the embodiments of this application, according to the communication method in this application, when a gNB determines that a time-frequency resource #1 needs to be used to transmit a service #1, the gNB may send scheduling information to UE that accesses a service #2. The scheduling information may be used to indicate the UE to interrupt uplink transmission on a time-frequency resource #2, where the time-frequency resource #2 and the time-frequency resource #1 have an overlapping part. Therefore, interference to transmission of the service # 1 can be avoided, and communication accuracy and reliability can be improved.

### BRIEF DESCRIPTION OF DRAWINGS

FIG. 1 is a schematic architectural diagram of a communications system according to this application;
FIG. 2 is a schematic interaction diagram of an example of a communication method according to this application;
FIG. 3 is a schematic interaction diagram of another example of a communication method according to this application;
FIG. 4 is a schematic diagram of an example of resource scheduling according to this application;
FIG. 5 is a schematic diagram of another example of resource scheduling according to this application;
FIG. 6 is a schematic interaction diagram of still another example of a communication method according to this application;
FIG. 7 is a schematic diagram of still another example of resource scheduling according to this application;
FIG. 8 is a schematic diagram of yet another example of resource scheduling according to this application;
FIG. 9 is a schematic diagram of still yet another example of resource scheduling according to this application;
FIG. 10 is a schematic block diagram of an example of a communications apparatus according to this application;
FIG. 11 is a schematic block diagram of another example of a communications apparatus according to this application;
FIG. 12 is a schematic block diagram of an example of a terminal device according to this application; and
FIG. 13 is a schematic block diagram of an example of a network device according to this application.

### DESCRIPTION OF EMBODIMENTS

The following describes the technical solutions of this application with reference to the accompanying drawings.

The technical solutions in the embodiments of this application may be applied to various communications systems, such as a global system for mobile communications (Global System of Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a 5th generation (5th Generation, 5G) system, or a new radio (New Radio, NR) system.

As an example instead of a limitation, a terminal device in the embodiments of this application may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a station (STATION, STA) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a next generation communications system such as a terminal device in a 5G network or a terminal device in a future evolved public land mobile network (Public Land Mobile Network, PLMN).

As an example instead of a limitation, the terminal device in the embodiments of this application may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that is directly worn on the body or incorporated into clothes or an accessory of a user. The wearable device is more than a hardware device, and implements a strong function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with other devices such as smartphones, for example, various smart bands or smart jewelry for monitoring physical signs.

In addition, the terminal device in the embodiments of this application may alternatively be a terminal device in an internet of things (Internet of Things, IoT) system. IoT is an important part of development of future information technologies, and a main technical feature of IoT is that things are connected to a network using a communications technology, to implement an intelligent network where humans and machines are interconnected and things are interconnected.

In the embodiments of this application, IoT may implement massive connections, deep coverage, and power saving of terminals by using, for example, a narrow band (Narrow Band) NB technology. For example, an NB includes only one resource block (Resource Block, RB). In other words, the NB has a bandwidth of only 180 KB. To implement massive access, access of terminals needs to be discrete. According to a communication method in the embodiments of this application, a congestion problem of IoT that occurs when massive terminals access a network using the NB technology can be effectively resolved.

A network device may be a device configured to communicate with a mobile device, such as an access network device. As an example instead of a limitation, in this application, the network device may be an access point (Access Point, AP) in a WLAN, a base transceiver station (Base Transceiver Station, BTS) in GSM or CDMA, a NodeB (NodeB, NB) in WCDMA, a gNB in a new radio (New Radio, NR) system, an evolved NodeB (Evolved Node B, eNB or eNodeB) in LTE, a relay station, an access point, a vehicle-mounted device, a wearable device, an access network device in a future 5G network, an access network device in a future evolved PLMN network, or the like.

In addition, in the embodiments of this application, the access network device provides a service for a cell, and the terminal device communicates with the access network device by using a transmission resource (for example, a frequency domain resource or a spectrum resource) of the cell. The cell may be a cell corresponding to the access network device (for example, a base station). The cell may belong to a macro base station, or a base station corresponding to a small cell (Small cell). The small cell herein may include a metro cell (Metro cell), a micro cell (Micro cell), a pico cell (Pico cell), a femto cell (Femto cell), or the like. These small cells feature small coverage and low transmit power, and are suitable for providing a high-rate data transmission service.

In addition, in an LTE system or a 5G system, a plurality of cells may simultaneously work on a carrier at a same frequency. In some special scenarios, it may be considered that a concept of the carrier is equivalent to a concept of the cell. For example, in a carrier aggregation (Carrier Aggregation, CA) scenario, when a secondary component carrier is configured for UE, a carrier index of the secondary component carrier and a cell identity (Cell Identity, Cell ID) of a secondary cell working on the secondary component carrier are both carried. In this case, it may be considered that the concept of the carrier is equivalent to the concept of the cell. For example, that UE accesses a carrier is equivalent to that the UE accesses a cell.

A core network device may be connected to a plurality of access network devices, and is configured to control the access network devices. In addition, the core network device can distribute, to the access network devices, data received from a network side (for example, the Internet).

The foregoing enumerated functions and specific implementations of the terminal device, the access network device, and the core network device are merely examples for description, and this application is not limited thereto.

In the embodiments of this application, the terminal device or the network device includes a hardware layer, an operating system layer running above the hardware layer, and an application layer running above the operating system layer. The hardware layer includes hardware such as a central processing unit (Central Processing Unit, CPU), a memory management unit (Memory Management Unit, MMU), and a memory (also referred to as a main memory). The operating system may be any one or more computer operating systems that implement service processing through a process (Process), such as a Linux operating system, a Unix operating system, an Android operating system, an iOS operating system, or a Windows operating system. The application layer includes applications such as a browser, an address book, word processing software, and instant communications software. In addition, a specific structure of an execution body of a method provided in the embodiments of this application is not particularly limited in this application, provided that a program that records code of the method provided in the embodiments of this application can be run to perform communication according to the method provided in the embodiments of this application. For example, the execution body of the method provided in the embodiments of this application may be the terminal device or the network device, or a functional module that is in the terminal device or the network device and that can invoke and execute the program.

In addition, aspects or features in the embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (Compact Disc, CD) or a digital versatile disc (Digital Versatile Disc, DVD)), a smart card, and a flash memory component (for example, an erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

It should be noted that in the embodiments of this application, a plurality of application programs may be run at the application layer. In this case, an application program for performing the communication method in the embodiments of this application may be different from an application program configured to control a receive end device to implement an action corresponding to received data.

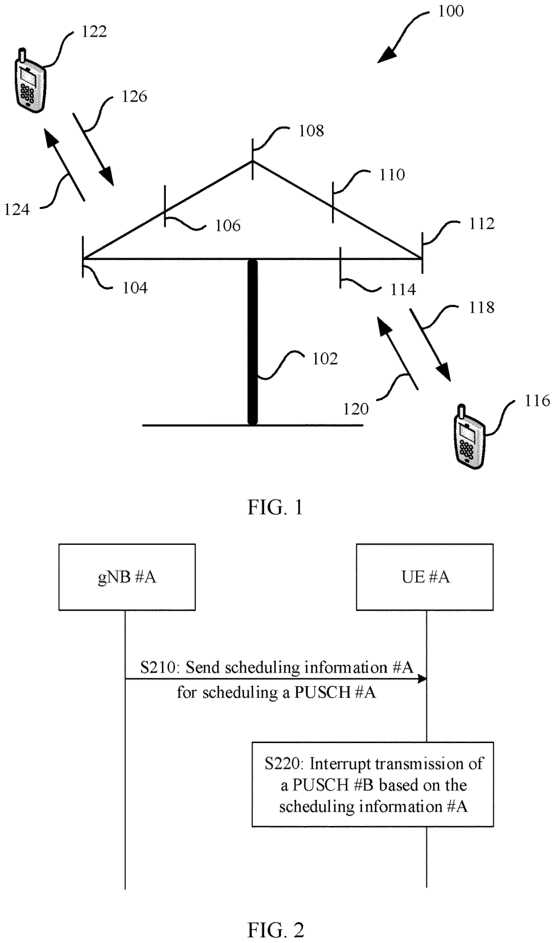

FIG. 1 is a schematic diagram of a system 100 to which a communication method in the embodiments of this application is applicable. As shown in FIG. 1, the system 100 includes an access network device 102, and the access network device 102 may include one or more antennas, for example, antennas 104, 106, 108, 110, 112, and 114. In addition, the access network device 102 may further include a transmitter chain and a receiver chain. A person of ordinary skill in the art can understand that the transmitter chain and the receiver chain may both include a plurality of components related to signal sending and receiving (for example, a processor, a modulator, a multiplexer, a demodulator, a demultiplexer, or an antenna).

The access network device 102 may communicate with a plurality of terminal devices (for example, a terminal device 116 and a terminal device 122). However, it can be understood that the access network device 102 may communicate with any quantity of terminal devices that are similar to the terminal device 116 or the terminal device 122. The terminal devices 116 and 122 each may be, for example, a cellular phone, a smartphone, a portable computer, a handheld communications device, a handheld computing device, a satellite radio apparatus, a global positioning system, a PDA, and/or any other appropriate device configured to perform communication in the wireless communications system 100.

As shown in FIG. 1, the terminal device 116 communicates with the antennas 112 and 114. The antennas 112 and 114 send information to the terminal device 116 over a forward link 118 (also referred to as a downlink), and receive information from the terminal device 116 over a reverse link 120 (also referred to as an uplink). In addition, the terminal device 122 communicates with the antennas 104 and 106. The antennas 104 and 106 send information to the terminal device 122 over a forward link 124, and receive information from the terminal device 122 over a reverse link 126.

For example, in a frequency division duplex (Frequency Division Duplex, FDD) system, the forward link 118 and the reverse link 120 may use different frequency bands, and the forward link 124 and the reverse link 126 may use different frequency bands.

For another example, in a time division duplex (Time Division Duplex, TDD) system and a full duplex (Full Duplex) system, the forward link 118 and the reverse link 120 may use a same frequency band, and the forward link 124 and the reverse link 126 may use a same frequency band.

Each antenna (or an antenna group including a plurality of antennas) and/or an area that are/is designed for communication are/is referred to as a sector of the access network device 102. For example, an antenna group may be designed to communicate with a terminal device in a sector within a coverage area of the access network device 102. The access network device 102 may send, through a single antenna or a multi-antenna transmit diversity, signals to all terminal devices in the sector corresponding to the access network device 102. In a procedure in which the access network device 102 communicates with the terminal devices 116 and 122 over the forward links 118 and 124 respectively, a transmit antenna of the access network device 102 may use beamforming to improve signal-to-noise ratios of the forward links 118 and 124. In addition, compared with a manner in which an access network device sends, through a single antenna or a multi-antenna transmit diversity, signals to all terminal devices served by the access network device, a manner in which the access network device 102 sends, through beamforming, signals to the terminal devices 116 and 122 that are randomly dispersed in the related coverage area causes less interference to a mobile device in a neighboring cell.

At a given time, the access network device 102, the terminal device 116, or the terminal device 122 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or read from a memory) a specific quantity of data bits to be sent to the wireless communications receiving apparatus over a channel. The data bits may be included in a transport block (or a plurality of transport blocks) of the data, and the transport block may be segmented to generate a plurality of code blocks.

In addition, the communications system 100 may be a PLMN network, a D2D network, an M2M network, an IoT network, or another network. FIG. 1 is merely a simplified schematic diagram used as an example. The system 100 may further include another access network device, which is not shown in FIG. 1.

In the embodiments of this application, data or information may be carried on a time-frequency resource. The time-frequency resource may include a time domain resource and a frequency domain resource. In time domain, the time-frequency resource may include one or more time domain units. In frequency domain, the time-frequency resource may include a frequency domain unit.

One time domain unit may be one symbol, one mini-slot (Mini-slot), one slot (slot), or one subframe (subframe). Duration of one subframe in time domain may be one millisecond (ms). One slot includes seven or 14 symbols. One mini-slot may include at least one symbol (for example, two symbols, seven symbols, 14 symbols, or any quantity of symbols less than or equal to 14 symbols).

One frequency domain unit may be one resource block (Resource block, RB), one resource block group (Resource block group, RBG), or one predefined subband (Subband).

In the embodiments of this application, "data" or "information" may be understood as a bit generated after an information block is encoded, or a modulation symbol generated after an information block is encoded and modulated.

One information block may include at least one transport block (Transport Block TB), or one information block may include at least one TB group (including at least one TB), or one information block may include at least one code block (Code Block, CB), or one information block may include at least one CB group (including at least one CB).

In the embodiments of this application, each communications device (such as the network device or the terminal device) in the communications system 100 may use, in a scheduling-free mode, a resource (for example, a frequency domain resource) for communication, or may use, in a scheduling mode, a resource (for example, a frequency domain resource) for communication. This is not particularly limited in the embodiments of this application. The following separately describes the scheduling mode and the scheduling-free mode.

### A. Scheduling mode

Specifically, in the embodiments of this application, data transmission (for example, uplink transmission or downlink transmission) may be performed based on scheduling performed by the network device. As an example instead of a limitation, a time domain unit of the scheduled data transmission may be, for example, a transmission time interval (Transmission Time Interval, TTI) or a short transmission time interval (short Transmission Time Interval, sTTI).

A specific scheduling procedure is: A base station sends a control channel, such as a physical downlink control channel (Physical Downlink Control Channel, PDCCH), an enhanced physical downlink control channel (Enhanced Physical Downlink Control Channel, EPDCCH), or a physical downlink control channel used to schedule sTTI transmission (sTTI Physical Downlink Control Channel, sPDCCH). The control channel may carry scheduling information in different downlink control information (Downlink Control Information, DCI) formats that is used to schedule a physical downlink shared channel (Physical Downlink Shared Channel, PDSCH) or a physical uplink shared channel (Physical Uplink Shared Channel, PUSCH). The scheduling information includes control information such as resource allocation information and a modulation and coding scheme. The terminal device detects the control channel, and receives a downlink data channel or sends an uplink data channel based on the scheduling information carried on the detected control channel. After an sTTI technology is introduced, the scheduling information carried on the control channel may indicate to receive a downlink data channel with a TTI of 1 ms or less or send an uplink data channel with a TTI of 1 ms or less. In addition, in NR, the scheduling information carried on the control channel may directly indicate to occupy specific symbols for the scheduled data transmission.

### B. Scheduling-free mode

Specifically, to handle transmission of a large quantity of low-latency and high-reliability services in a future network, a scheduling-free transmission solution may be used. In the embodiments of this application, data transmission may alternatively be performed in the scheduling-free mode. Scheduling-free transmission may also be referred to as grant-free transmission. The scheduling-free transmission herein may be specific to uplink data transmission or downlink data transmission. The scheduling-free transmission may have any one or more of the following meanings, a combination of some technical features in a plurality of meanings, or another similar meaning.

The scheduling-free transmission may be: The network device pre-allocates a plurality of transmission resources and notifies the terminal device of the plurality of transmission resources; then, when the terminal device has an uplink data transmission requirement, the terminal device selects at least one transmission resource from the plurality of transmission resources pre-allocated by the network device, and sends uplink data on the selected transmission resource; and the network device detects, on the at least one transmission resource in the plurality of pre-allocated transmission resources, the uplink data sent by the terminal device. The detection may be blind detection, or detection performed based on a control field in the uplink data, or detection performed in another manner.

The scheduling-free transmission may be: The network device pre-allocates a plurality of transmission resources and notifies the terminal device of the plurality of transmission resources; and when the terminal device has an uplink data transmission requirement, the terminal device selects at least one transmission resource from the plurality of transmission resources pre-allocated by the network device, and sends uplink data on the selected transmission resource.

The scheduling-free transmission may be: Information about a plurality of pre-allocated transmission resources is obtained; and when there is an uplink data transmission requirement, at least one transmission resource is selected from the plurality of transmission resources, and uplink data is sent on the selected transmission resource. The information about the plurality of pre-allocated transmission resources may be obtained from the network device.

The scheduling-free transmission may be a method in which the network device does not need to perform dynamic scheduling to implement uplink data transmission of the terminal device, where the dynamic scheduling may be a scheduling manner in which the network device indicates, by using signaling, a transmission resource for each uplink data transmission of the terminal device. Optionally, the implementing uplink data transmission of the terminal device may be understood as allowing two or more terminal devices to transmit uplink data on a same time-frequency resource. Optionally, the transmission resource may be a transmission resource or transmission resources in one or more transmission time units after a moment at which the terminal device receives the signaling. A transmission time unit may be a minimum time unit for one transmission, for example, a TTI.

The scheduling-free transmission may be: The terminal device performs uplink data transmission when the network device does not need to perform scheduling. The scheduling may be: The terminal device sends an uplink scheduling request to the network device; and after the network device receives the scheduling request, the network device sends an uplink grant to the terminal device, where the uplink grant indicates an uplink transmission resource allocated to the terminal device.

The scheduling-free transmission may be a contention-based transmission manner, which may be specifically: A plurality of terminals simultaneously transmit uplink data on a same pre-allocated time-frequency resource, while a base station does not need to perform scheduling.

The data may be service data or signaling data.

The blind detection may be understood as detection performed, when it is not predicted whether data is to arrive, on data that may arrive. The blind detection may also be understood as detection performed without an explicit signaling indication.

As an example instead of a limitation, in the embodiments of this application, a basic time unit for scheduling-free transmission may be a TTI (for example, may be an sTTI). After an sTTItechnology is introduced, the scheduling-free transmission may include receiving a downlink data channel with a TTI of 1 ms or less or sending an uplink data channel with a TTI of 1 ms or less.

In this application, when a gNB determines that a time-frequency resource #1 needs to be used to transmit a service #1, the gNB may send scheduling information to UE that is to transmit another service (denoted as a service #2), to avoid interference from the service #2 to the service #1 or to prevent the UE from using the time-frequency resource #1 to transmit the service #2.

The scheduling information may indicate the UE that receives the scheduling information to interrupt transmission of a service on a time-frequency resource #2, where the time-frequency resource #2 overlaps the time-frequency resource #1.

In this application, the time-frequency resource #2 may overlap the time-frequency resource #1.

Optionally, "the time-frequency resource #2 may overlap the time-frequency resource #1" may be: The time-frequency resource #2 may overlap the time-frequency resource #1 in time domain.

For example, the time-frequency resource #2 partially overlaps the time-frequency resource #1 in time domain.

For another example, the time-frequency resource #2 completely overlaps the time-frequency resource #1 in time domain.

In other words, the time-frequency resource #2 and the time-frequency resource #1 have at least one same time domain unit.

For example, the time-frequency resource #2 and the time-frequency resource #1 have at least one same subframe.

Alternatively, the time-frequency resource #2 and the time-frequency resource #1 have at least one same slot.

Alternatively, the time-frequency resource #2 and the time-frequency resource #1 have at least one same symbol.

Optionally, "the time-frequency resource #2 may overlap the time-frequency resource #1" may be: The time-frequency resource #2 may overlap the time-frequency resource #1 in frequency domain.

For example, the time-frequency resource #2 partially overlaps the time-frequency resource #1 in frequency domain.

For another example, the time-frequency resource #2 completely overlaps the time-frequency resource #1 in frequency domain.

In other words, the time-frequency resource #2 and the time-frequency resource #1 have at least one same frequency domain unit.

For example, the time-frequency resource #2 and the time-frequency resource #1 have at least one same subband.

Alternatively, the time-frequency resource #2 and the time-frequency resource #1 have at least one same subcarrier.

Alternatively, the time-frequency resource #2 and the time-frequency resource #1 have at least one same RB.

Alternatively, the time-frequency resource #2 and the time-frequency resource #1 have at least one same RBG.

Optionally, "the time-frequency resource #2 may overlap the time-frequency resource #1" may be: The time-frequency resource #2 may overlap the time-frequency resource #1 in both frequency domain and time domain. In other words, the time-frequency resource #2 and the time-frequency resource #1 may have at least one same resource element (Resource Element, RE).

As an example instead of a limitation, the service #1 may be an ultra-reliable low-latency communication (Ultra-Reliable Low-Latency Communication, URLLC) service, and the service #2 may be an enhanced mobile broadband (Enhanced Mobile Broadband, eMBB) service.

Specifically, the International Telecommunication Union-Radiocommunication Sector (International Telecommunication Union-Radio Communication Sector, ITU-R) defines three major application scenarios of future 5G: eMBB, massive machine-type communications (Massive Machine-Type Communications, mMTC), and URLLC. The ITU-R also defines capability requirements of a 5G network from eight dimensions, such as throughput, latency, connection density, and spectrum efficiency improvement. The eMBB service mainly has requirements for a high rate, wide coverage, a transmission latency, and mobility. The URLLC service mainly has requirements for ultra-high reliability, ultra-low mobility, and an ultra-low transmission latency. Generally, reliability of transmission through a wireless air interface needs to reach 99.999% within 1 millisecond (ms).

For ease of understanding and description, the following uses a procedure in which a gNB #A (an example of a network device) communicates with UE #A (an example of a terminal device) based on the scheduling information in this application as an example for description.

FIG. 2 shows a specific procedure of a communication method 200 by using communication between the gNB #A (an example of a network device) and the UE #A (an example of a terminal device) as an example.

As shown in FIG. 2, in S210, the gNB #A may send scheduling information #A (an example of first scheduling information) to the UE #Ain a time period #A.

As an example instead of a limitation, the time period #A may be a physical downlink control channel (Physical Downlink Control Channel, PDCCH) monitoring occasion (monitoring occasion).

As an example instead of a limitation, the scheduling information #A may be uplink scheduling information (Uplink Grant, UL Grant).

As an example instead of a limitation, the scheduling information #A may be carried in downlink control information (Downlink Control Information, DCI).

The scheduling information #A may be scheduling information used to schedule transmission of a physical uplink shared channel (Physical Uplink Shared Channel, PUSCH) #A (an example of first uplink transmission).

In other words, data or information of a service #A may be transmitted on the PUSCH #A.

As an example instead of a limitation, the service #A may be tan eMBB service.

For example, the scheduling information #A may be used to indicate a time-frequency resource corresponding to the PUSCH #A (which is an example of a first time-frequency resource and is denoted as a time-frequency resource #A for ease of understanding and description).

As an example instead of a limitation, the scheduling information #A may indicate a size and position of the time-frequency resource #A. For example, the scheduling information #A may indicate a time domain size and time domain position of the time-frequency resource #A. For another example, the scheduling information #A may indicate a frequency domain size and frequency domain position of the time-frequency resource #A.

In this embodiment of this application, transmission of an uplink channel may be transmission of data or information carried on the uplink channel. The data or information may be data obtained after channel coding or information obtained after channel coding.

As an example instead of a limitation, in this embodiment of this application, the uplink channel may be carrying uplink data (for example, the uplink channel is a PUSCH) or uplink control information (for example, the uplink channel is a PUCCH).

The uplink control information may include but is not limited to one or more of the following information:

### 1. Feedback information

In this embodiment of this application, the uplink control information may include feedback information for downlink data.

Specifically, in this embodiment of this application, a feedback technology may be used for transmission of the downlink data. As an example instead of a limitation, the feedback technology may be, for example, a hybrid automatic repeat request (Hybrid Automatic Repeat Request, HARQ) technology.

The HARQ technology is a technology combining a forward error correction (Forward Error Correction, FEC) coding technique and an automatic repeat request (Automatic Repeat Request, ARQ) technique.

For example, in the HARQ technology, after receiving data from a transmit end, a receive end may determine whether the data can be correctly decoded. If the data cannot be correctly decoded, the receive end may feed back negative acknowledgment (negative -acknowledgment, NACK) information to the transmit end. Then, the transmit end may determine, based on the NACK information, that the receive end does not correctly receive the data, and the transmit end may perform retransmission. If the data can be correctly decoded, the receive end may feed back acknowledgment (acknowledgment, ACK) information to the transmit end. Then, the transmit end may determine, based on the ACK information, that the receive end correctly receives the data, and the transmit end may determine that data transmission is completed.

That is, in this embodiment of this application, when the receive end successfully performs decoding, the receive end may feed back the ACK information to the transmit end; when the receive end fails to perform decoding, the receive end may feed back the NACK information to the transmit end.

As an example instead of a limitation, in this embodiment of this application, the uplink control information may include ACK information or NACK information in the HARQ technology.

It should be understood that the enumerated feedback information is merely an example for description, and this application is not limited thereto. All other information that can indicate a status of receiving downlink data by the terminal device shall fall within the protection scope of this application. For example, the feedback information may further be discontinuous transmission (Discontinuous Transmission, DTX) information, and the DTX information may be used to indicate that the terminal device fails to receive downlink data.

### 2. Channel quality indicator (Channel Quality Indicator, CQI) information

In this embodiment of this application, a CQI may be used to reflect channel quality of a physical downlink shared channel (Physical Downlink Shared Channel, PDSCH). As an example instead of a limitation, in this embodiment of this application, 0 to 15 may be used to represent the channel quality of the PDSCH. 0 represents poorest channel quality, and 15 represents best channel quality.

In this embodiment of this application, the terminal device may send the CQI information to the network device on a physical uplink control channel (Physical Uplink Control Channel, PUCCH) or a physical uplink shared channel (Physical Uplink Shared Channel, PUSCH). The network device may determine a wireless channel condition of the current PDSCH or PUSCH based on the CQI information, to complete scheduling for the PDSCH. For example, in this embodiment of this application, the network device may determine adaptive modulation and coding (Adaptive Modulation and Coding, AMC) scheme, a modulation and coding scheme (Modulation and Coding Scheme, MCS), a bit rate of uplink transmission or downlink transmission or a data volume of uplink transmission or downlink transmission, or the like based on the CQI information.

### 3. Rank indicator (Rank Indicator, RI) information

In this embodiment of this application, the RI information may be used to indicate a quantity of valid data layers of a PDSCH, or the RI information may be used to indicate a quantity of code words (Code Word, CW) that can be currently supported by the terminal device.

### 4. Precoding matrix indicator (Precoding Matrix Indicator, PMI) information

In this embodiment of this application, the PMI information may be used to indicate an index (index) of a codebook set. That is, when a multiple-antenna technology such as a multiple-input multiple-output (Multiple-Input Multiple-Output, MIMO) technology is used, precoding (precoding) may be performed based on a precoding matrix during physical layer baseband processing of a PDSCH. The terminal device may indicate the precoding matrix by using the PMI information, to improve signal quality of the PDSCH.

### 5. Uplink reference signals

In this embodiment of this application, the uplink reference signals include a demodulation reference signal (Demodulation Reference Signal, DMRS) used for uplink demodulation, a sounding reference signal (Sounding reference signal, SRS) used for uplink channel measurement, and the like. A DMRS used to demodulate a PUCCH is referred to as a PUCCH DMRS, and a DMRS used to demodulate a PUSCH is referred to as a PUSCH DMRS.

### 6. Channel state information (Channel State Information, CSI)

In the field of wireless communications, the CSI is a channel property of a communication link. The CSI describes a fading factor of a signal on each transmission path, namely, a value of each element in a channel gain matrix H, and describes information such as signal scattering (Scattering), environment fading (multipath fading or shadowing fading, fading), and power decay with distance (power decay with distance). The CSI enables a communications system to adapt to a current channel condition and ensures high-reliability and high-rate communication in a multi-antenna system.

### 7. Scheduling request (Scheduling Request, SR)

In this application, a time-frequency resource to be used by UE to send the scheduling request is indicated by the network device, but an occasion for sending the SR may be determined by the UE. For example, when the UE determines that a service arrives, if the network device does not allocate a time-frequency resource to the service, the UE may send an SR on a time-frequency resource pre-indicated by the network device, and the network device may allocate a time-frequency resource to the service based on the SR.

For ease of understanding, the following uses a PUSCH as an example to describe in detail a procedure related to uplink transmission.

In this application, the scheduling information #A may be specifically used to indicate the UE #A to interrupt transmission of a PUSCH #B (an example of second uplink transmission).

A time-frequency resource corresponding to the PUSCH #B (denoted as a time-frequency resource #B) overlaps a time-frequency resource #C.

The time-frequency resource #C is a time-frequency resource corresponding to a PUSCH #C.

A meaning of "a time-frequency resource #B overlaps a time-frequency resource #C" may be similar to the meaning of "the time-frequency resource #2 overlaps the time-frequency resource #1". To avoid repetition, details are not described herein.

The PUSCH #C may be an uplink channel carrying a service #C (an example of the service #1), and the service #C may be, for example, a URLLC service.

The PUSCH #B may be an uplink channel carrying a service #B (an example of the service #2), and the service #B may be, for example, an eMBB service.

In addition, the service #B may be a service accessed by the UE #A, and the PUSCH #B may be an uplink channel of the UE #A.

Furthermore, the service #C may be a service accessed by the UE #A, and the PUSCH #C may be an uplink channel of the UE #A (that is, Case 1).

Alternatively, the service #C may be a service accessed by another UE (denoted as UE #C), and the PUSCH #C may be an uplink channel of the UE #C (that is, Case 2).

In addition, the PUSCH #B may be transmitted in a scheduling mode, or the PUSCH #B may be transmitted in a scheduling-free mode. This is not particularly limited in this application.

There may be one or more PUSCHs #B. This is not particularly limited in this application.

In addition, "interrupting transmission of the PUSCH #B" may be: If the UE #A is transmitting the PUSCH #B, in other words, the UE #A is receiving or sending data on the PUSCH #B, the UE #A stops (or "suspends", "cancels", or "prohibits") transmission of the PUSCH #B.

Alternatively, "interrupting transmission of the PUSCH #B" may be: If the UE #A has not transmitted the PUSCH #B, in other words, the UE #A has not received or sent data on the PUSCH #B, the UE #A cancels (or "prohibits") transmission of the PUSCH #B.

In this application, that the scheduling information #A "indicates the UE #A to interrupt transmission of a PUSCH #B" may include the following procedures.
Procedure 1: initiate interruption processing.
Procedure 2: Determine an object of interruption processing.

The following describes the foregoing procedures in detail.

### Procedure 1

As an example instead of a limitation, any one of the following manners may be used to indicate to start interruption processing.

### Manner 1

In this application, the scheduling information #A may carry trigger information (an example of interruption indication information), and the trigger information is used to trigger interruption processing.

As an example instead of a limitation, the DCI corresponding to the scheduling information #A may include an interruption indication field (field).

In addition, as an example instead of a limitation, the interruption indication field may include N bits, where N is a positive integer. For example, a value of N may be 1. That is, the trigger information may include one bit.

In this embodiment of this application, the trigger information may be a specified value, for example, "0".

To be specific, when the bit in the interruption indication field is "0", it may indicate that the scheduling information #A may carry the trigger information, that is, the UE #A needs to perform interruption processing.

When the bit in the interruption indication field is "1", it may indicate that the scheduling information #A may not carry the trigger information, that is, the UE does not need to perform interruption processing.

It should be understood that the foregoing enumerated values of the bits corresponding to the trigger information are merely examples for description, and are not particularly limited in this application, provided that the gNB and the UE are consistent in interpretation of the bits in the interruption indication field (that is, whether interruption processing needs to be started).

In this application, a location and length of the interruption indication field in the DCI may be specified in a communications system or a communications protocol, or may be notified by the gNB to the UE by using higher layer signaling. This is not particularly limited in this application, provided that a location and length of the interruption indication field in the DCI that are determined by the gNB is the same as a location and length of the interruption indication field in the DCI that are determined by the UE.

In Manner 1, when determining that transmission of the PUSCH #B needs to be interrupted, the gNB #A may set the bit in the interruption indication field in the scheduling information #A to "0".

As an example instead of a limitation, the interruption indication field may be implemented by a reserved field in the DCI.

For example, the location of the interruption indication field in the DCI may be specified in the communications system or the communications protocol, and the UE may obtain, from the DCI sent by the gNB, a bit (or a bit sequence) corresponding to the interruption indication information.

Therefore, in S220, when determining that the bit in the interruption indication field is "0", the UE #A determines that interruption processing needs to be started.

### Manner 2

When determining that transmission of the PUSCH #B needs to be interrupted, the gNB #A may set a specified transmission parameter (an example of a first transmission parameter) in the scheduling information #A to a preset value.

There may be one or more first transmission parameters. This is not limited in this application. In addition, the transmission parameters may be some of transmission parameters used for a channel.

Therefore, in S220, when determining that a value of the first transmission parameter is the preset value, the UE #A determines that interruption processing needs to be started.

In this application, the preset value may be specified in a communications system or a communications protocol, or may be notified by the gNB to the UE by using higher layer signaling. This is not particularly limited in this application, provided that a preset value obtained by the gNB is the same as a preset value obtained by the UE.

As an example instead of a limitation, the first transmission parameter may include one or more of the following parameters.

### Parameter a

Hybrid automatic repeat request (Hybrid Automatic Repeat reQuest, HARQ) identifier (Identifier, ID)

Specifically, the HARQ ID may be an ID of a HARQ process (process) or a number (number) of a HARQ process.

When determining that transmission of the PUSCH #B needs to be interrupted, the gNB #A may set the HARQ ID in the scheduling information #A to a HARQ ID #a.

Therefore, in S220, when determining that the HARQ ID in the scheduling information #A is the HARQ ID #a, the UE #A determines that interruption processing needs to be started.

As an example instead of a limitation, the PUSCH #B may be a PUSCH scheduled by the gNB #A for the UE #A in a time period #B based on scheduling information #B. The time period #B is located before the time period #A.

In this case, the HARQ ID #a may be a HARQ ID carried in the scheduling information #B.

Alternatively, a value of the HARQ ID #a may be specified in the communications system or the communications protocol, or may be notified in advance by the gNB #Ato the UE #Aby using, for example, higher layer signaling. For example, the value of the HARQ ID #a may be 15.

### Parameter b

New data indicator (New Data Indicator, NDI)

When determining that transmission of the PUSCH #B needs to be interrupted, the gNB #A may set the NDI in the scheduling information #A to an NDI #a.

Therefore, in S220, when determining that the NDI in the scheduling information #A is the NDI #a, the UE #A determines that interruption processing needs to be started.

As an example instead of a limitation, the PUSCH #B may be a PUSCH scheduled by the gNB #A for the UE #A in a time period #B based on scheduling information #B. The time period #B is located before the time period #A.

In this case, the NDI #a may be an NDI carried in the scheduling information #B, or may be opposite to an NDI carried in the scheduling information #B.

Alternatively, a value of the NDI #a may be specified in the communications system or the communications protocol, or may be notified in advance by the gNB #A to the UE #A by using, for example, higher layer signaling. For example, the value of the NDI #a may be 0.

### Parameter c

Bit in a CSI request field

When determining that transmission of the PUSCH #B needs to be interrupted, the gNB #A may set the bit in the CSI request field in the scheduling information #A to a specified value, for example, "0".

Therefore, in S220, when determining that the bit in the CSI request field is "0", the UE #A determines that interruption processing needs to be started.

It should be understood that the foregoing enumerated specified value is merely an example for description, and is not particularly limited in this application, provided that the gNB and the UE have consistent interpretation of the bit in the CSI request field (that is, whether interruption processing needs to be started).

In this application, the specified value may be specified in the communications system or the communications protocol, or may be notified by the gNB to the UE by using higher layer signaling. This is not particularly limited in this application.

### Parameter d

Redundancy version (Redundancy Version, RV) ID

When determining that transmission of the PUSCH #B needs to be interrupted, the gNB #A may set the RV ID in the scheduling information #A to an RV ID #a.

Therefore, in S220, when determining that the RV ID in the scheduling information #A is the RV ID #a, the UE #A determines that interruption processing needs to be started.

As an example instead of a limitation, a specific value of the RV ID #a may be specified in the communications system or the communications protocol, or may be notified in advance by the gNB #A to the UE #A by using, for example, higher layer signaling. This is not particularly limited in this application. For example, the specific value of the RV ID #a may be "1".

### Parameter e

Modulation and coding scheme (Modulation and Coding Scheme, MCS)

When determining that transmission of the PUSCH #B needs to be interrupted, the gNB #A may set the MCS in the scheduling information #A to an MCS #a.

Therefore, in S220, when determining that the MCS in the scheduling information #A is the MCS #a, the UE #A determines that interruption processing needs to be started.

As an example instead of a limitation, a specific value of the MCS #a may be specified in the communications system or the communications protocol, or may be notified in advance by the gNB #A to the UE #A by using, for example, higher layer signaling. This is not particularly limited in this application. For example, the specific value of the MCS #a may be "30".

It should be understood that the foregoing enumerated parameters may be used separately or jointly. This is not particularly limited in this application.

For example, when determining that transmission of the PUSCH #B needs to be interrupted, the gNB #A may set the NDI in the scheduling information #A to the NDI #a, and may set the HARQ ID in the scheduling information #A to the HARQ ID #a. Therefore, when determining that the HARQ ID in the scheduling information #A is the HARQ ID #a and the NDI in the scheduling information #A is the NDI #a, the UE #A determines that interruption processing needs to be started.

For another example, if the CSI request field is set to zero, and an additional one bit in the scheduling information #A indicates that the PUSCH #B does not carry uplink data, the scheduling information #A indicates that interruption processing needs to be started.

For still another example, if the CSI request field is set to zero, and (the HARQ ID, the NDI, the RV ID, the MCS) is set to a pre-specified combination, for example, (15, 0, 1, 31), the scheduling information #A indicates that interruption processing needs to be started.

For yet another example, if uplink transmission scheduled later (for example, transmission of the PUSCH #B) and uplink transmission scheduled earlier (namely, transmission of the PUSCH #C) have a same HARQ ID, but different NDIs (for example, an NDI is toggled), and (the RV ID, the MCS) is a pre-specified combination, the scheduling information #A indicates that interruption processing needs to be started.

For still yet another example, if uplink transmission scheduled later (for example, transmission of the PUSCH #B) and uplink transmission scheduled earlier (namely, transmission of the PUSCH #C) have a same HARQ ID and a same NDI (for example, an NDI is untoggled), the scheduling information #A indicates that interruption processing needs to be started.

For a further example, if the MCS has a preset fixed value, and a quantity of resource elements REs allocated to the PUSCH #B is less than or equal to a pre-specified value, the scheduling information #A indicates that interruption processing needs to be started.

It should be understood that the specific examples and usage of the foregoing enumerated first transmission parameters are merely examples for description. A person skilled in the art can make random changes to the specific examples and usage of the first transmission parameters, provided that the UE can determine, based on the first transmission parameter carried in the scheduling information, that the interruption processing needs to be started.

### Procedure 2

As an example instead of a limitation, the PUSCH #B may be determined in any one of the following manners.

### Manner a

In this application, the UE #A may determine, based on a moment (denoted as a moment #A) at which the scheduling information #A is received, a PUSCH of which transmission needs to be interrupted, namely, the PUSCH #B.

For example, before the moment #A, in other words, before the UE #A receives the scheduling information #A, the UE #A may receive one or more pieces of scheduling information.

In this case, the UE #A may use, as the PUSCH #B, a PUSCH scheduled based on a latest received piece of scheduling information in the one or more pieces of scheduling information (or based on a last piece of scheduling information that the UE #A receives before receiving the scheduling information #A).

Alternatively, the UE #A may use all PUSCHs scheduled based on the one or more pieces of scheduling information as PUSCHs #B.

### Manner b

In this application, the UE #A may determine, based on a time-frequency resource corresponding to the PUSCH #A (namely, the time-frequency resource #A), a PUSCH whose transmission needs to be interrupted, namely, the PUSCH #B.

For example, the UE #A may use a PUSCH as the PUSCH #B, where a time-frequency resource corresponding to the PUSCH and the time-frequency resource #A have an overlapping part.

That the two time-frequency resources "have an overlapping part" may include any one of the following meanings:
Meaning 1: The two time-frequency resources overlap in time domain but do not overlap in frequency domain.
Meaning 2: The two time-frequency resources overlap in frequency domain but do not overlap in time domain.
Meaning 3: The two time-frequency resources are completely the same (in time domain and/or in frequency domain).
Meaning 4: The two time-frequency resources are partially the same (in time domain and/or in frequency domain).

### Manner c

In this application, the UE #A may determine, based on a first transmission parameter (denoted as a transmission parameter #A) corresponding to the PUSCH #A, a PUSCH whose transmission needs to be interrupted, namely, the PUSCH #B.

For example, the UE #A may use a PUSCH as the PUSCH #B, where a transmission parameter corresponding to the PUSCH is the same as the transmission parameter #A.

The first transmission parameter may include any one or more of the parameter a to the parameter e.

For example, the UE #A may use a PUSCH as the PUSCH #B, where a HARQ ID corresponding to the PUSCH is the same as a HARQ ID corresponding to the PUSCH #A.

For another example, the UE #A may use a PUSCH as the PUSCH #B, where an NDI corresponding to the PUSCH is the same as an NDI corresponding to the PUSCH #A.

For still another example, the UE #A may use a PUSCH as the PUSCH #B, where an RV ID corresponding to the PUSCH is the same as an RV ID corresponding to the PUSCH #A.

It should be understood that the foregoing enumerated parameters may be used separately or jointly. This is not particularly limited in this application.

For example, the UE #A may use a PUSCH as the PUSCH #B, where a HARQ ID corresponding to the PUSCH is the same as a HARQ ID corresponding to the PUSCH #A, and an NDI corresponding to the PUSCH is the same as an NDI corresponding to the PUSCH #A.

Alternatively, in this application, the UE #A may determine a PUSCH as the PUSCH #B, where a first transmission parameter corresponding to the PUSCH has a preset value. The preset value may be a value specified in the communications system or the communications protocol, or may be a value notified by the gNB to the UE by using higher layer signaling.

It should be understood that the specific examples and usage of the foregoing enumerated first transmission parameters are merely examples for description. The person skilled in the art can make random changes to the specific examples and usage of the first transmission parameters, provided that the UE can identify a PUSCH, where the gNB expects the UE to interrupt transmission of the PUSCH.

Therefore, in S220, the UE #A can interrupt transmission of the PUSCH #B.

In this application, the PUSCH #A may be an uplink channel scheduled by the gNB #A for the UE #A (hereinafter referred to as Case 1 for ease of understanding and description). That is, the time-frequency resource corresponding to the PUSCH #A may be a time-frequency resource that is allocated by the gNB #A to the UE #A and that is to be used to transmit uplink information carried on the PUSCH #A.

Alternatively, the PUSCH #A may be an uplink channel scheduled by the gNB #A for UE #B (UE other than the UE #A) (hereinafter referred to as Case 2 for ease of understanding and description). That is, the time-frequency resource corresponding to the PUSCH #Amay be a time-frequency resource that is allocated by the gNB #A to the UE #B and that is to be used to transmit uplink information carried on the PUSCH #A.

The following describes in detail processing in the foregoing two cases.

### Case 1

Specifically, the gNB #A may send one or more pieces of scheduling information to the UE #A before a time period #A.

For ease of understanding, the following uses a processing procedure of scheduling information #B in the one or more pieces of scheduling information as an example for description.

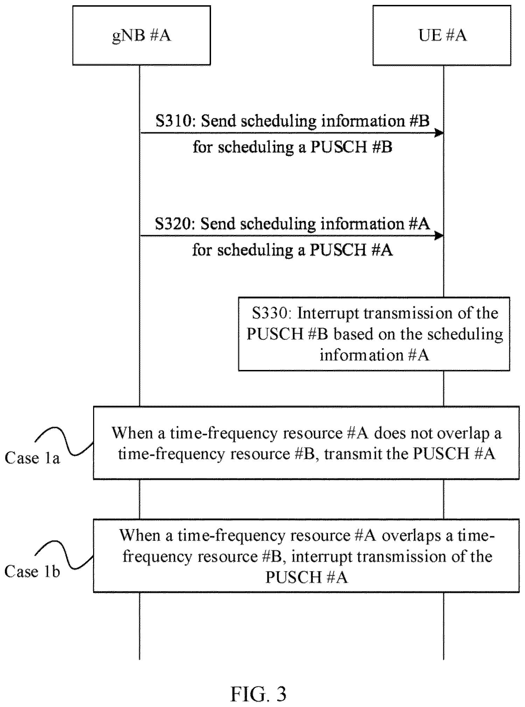

For example, as shown in FIG. 3, in S310, the gNB #A may send the scheduling information #B to the UE #A in a time period #B.

As an example instead of a limitation, the time period #B may be a PDCCH monitoring occasion.

In addition, the time period #B may be location before the time period #A.

As an example instead of a limitation, the scheduling information #B may be a UL grant.

As an example instead of a limitation, the scheduling information #B may be carried in DCI.

The scheduling information #B may be scheduling information for transmission of a PUSCH #B performed by the UE #A.

For example, the scheduling information #B may be used to indicate a time-frequency resource corresponding to the PUSCH #B (namely, a time-frequency resource #B).

As an example instead of a limitation, the scheduling information #B may indicate a size and position of the time-frequency resource #B. For example, the scheduling information #B may indicate a time domain size and time domain position of the time-frequency resource #B. For another example, the scheduling information #B may indicate a frequency domain size and frequency domain position of the time-frequency resource #B.

In this embodiment of this application, transmission of an uplink channel may be transmission of data or information carried on the uplink channel. The data or information may be data obtained after channel coding or information obtained after channel coding.

As an example instead of a limitation, the PUSCH #B may be used to transmit, for example, an eMBB service.

Then, the UE #A may determine related information of the PUSCH #B, for example, the time-frequency resource corresponding to the PUSCH #B, namely, the time-frequency resource #B.

For example, when determining that an emergency service (for example, a URLLC service) needs to be transmitted and needs to occupy the time-frequency resource corresponding to the PUSCH #B (for example, some or all of time-frequency resources corresponding to the PUSCH #B), the gNB #A may send scheduling information for the URLLC service to UE (for example, the UE #A or another UE) that accesses the URLLC service.

The URLLC service needs to occupy the time-frequency resource #B (for example, some or all of time-frequency resources #B), or a time-frequency resource corresponding to a PUSCH for the URLLC service and the time-frequency resource #B have an overlapping part. Therefore, to avoid interference caused by transmission of the PUSCH #B to transmission of the URLLC service, in S320, the gNB #A may send scheduling information #A to the UE #A. In S330, the UE #A may interrupt transmission of the PUSCH #B based on the scheduling information #A. A procedure of S320 may be similar to the procedure of S210, and a procedure of S330 may be similar to the procedure of S220. To avoid repetition, details are not described herein.

It should be noted that, as described above, the PUSCH whose transmission needs to be interrupted as indicated by the scheduling information #A may be a PUSCH scheduled based on a last piece of scheduling information received before the scheduling information #A is received. In this case, before determining that the URLLC service needs to be transmitted, the gNB #A may allocate, to the URLLC service, a time-frequency resource scheduled based on a last piece of scheduling information sent by the gNB #A for, for example, the eMBB service. That is, in this application, the scheduling information #B may be a last piece of scheduling information that the gNB #A sends for the eMBB service before sending the scheduling information #A.

Optionally, in this application, the communications system or the communications protocol may specify the following content, or the gNB #A and the UE #A may reach a consensus on the following content through negotiation.

When a time-frequency resource (an example of a second time-frequency resource) corresponding to an uplink channel whose transmission needs to be interrupted as indicated by scheduling information does not overlap a time-frequency resource (an example of a first time-frequency resource) corresponding to an uplink channel scheduled based on the scheduling information, transmission of the uplink channel scheduled based on the scheduling information may be normally performed.

When a time-frequency resource (an example of a second time-frequency resource) corresponding to an uplink channel whose transmission needs to be interrupted as indicated by scheduling information overlaps a time-frequency resource (an example of a first time-frequency resource) corresponding to an uplink channel scheduled based on the scheduling information, transmission of the uplink channel scheduled based on the scheduling information needs to be interrupted (or canceled).

In this application, transmission of the eMBB service may continue to be performed (that is, Case 1a). For example, if the gNB #A can allocate a new time-frequency resource to the UE #A in time, time-frequency resource #A may be enabled to not overlap the time-frequency resource #B, and the scheduling information #A may be used to indicate the UE #A to transmit data of the eMBB service on the time-frequency resource #A. Further, when determining that the time-frequency resource #A does not overlap the time-frequency resource #B, the UE #A may normally transmit the PUSCH #A on the time-frequency resource #A.

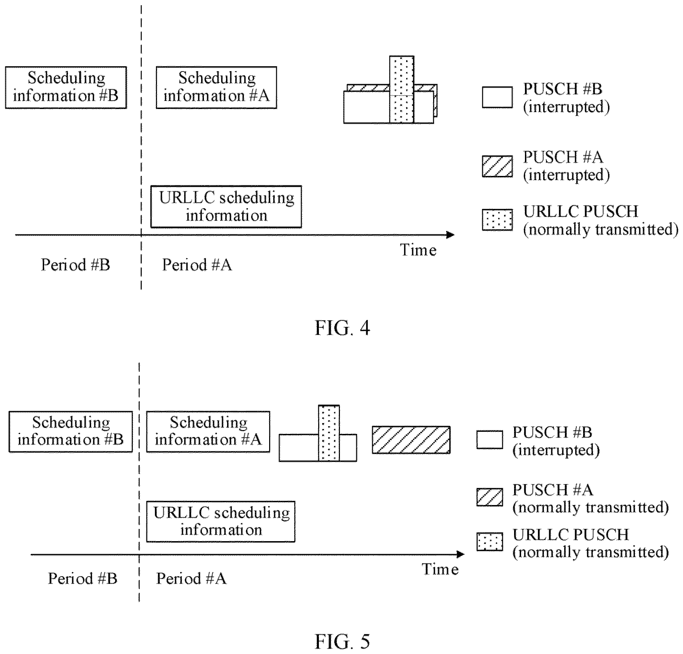

FIG. 5 is a schematic diagram of an example of resource scheduling in Case 1a according to this application.

A time-frequency resource indicated by scheduling information sent later is enabled to not overlap a time-frequency resource indicated by scheduling information sent earlier, so that the terminal device can continue to perform, on the time-frequency resource indicated by the scheduling information sent later, uplink transmission scheduled based on the scheduling information sent earlier. Therefore, communication flexibility can be improved.

Alternatively, in this application, transmission of the eMBB service may be interrupted (that is, Case 1b). For example, if the gNB #A cannot allocate a new time-frequency resource to the UE #A in time, time-frequency resource #A may be enabled to overlap the time-frequency resource #B. Further, when determining that the time-frequency resource #A overlaps the time-frequency resource #B, the UE #A may interrupt (or cancel) transmission of the PUSCH #A.

FIG. 4 is a schematic diagram of an example of resource scheduling in Case 1b according to this application.

A time-frequency resource indicated by scheduling information sent later is enabled to overlap a time-frequency resource indicated by scheduling information sent earlier, so that the terminal device can interrupt uplink transmission scheduled based on the scheduling information sent earlier. In addition, the gNB does not need to allocate a new resource to the uplink transmission. Therefore, resource scheduling efficiency can be improved.

### Case 2

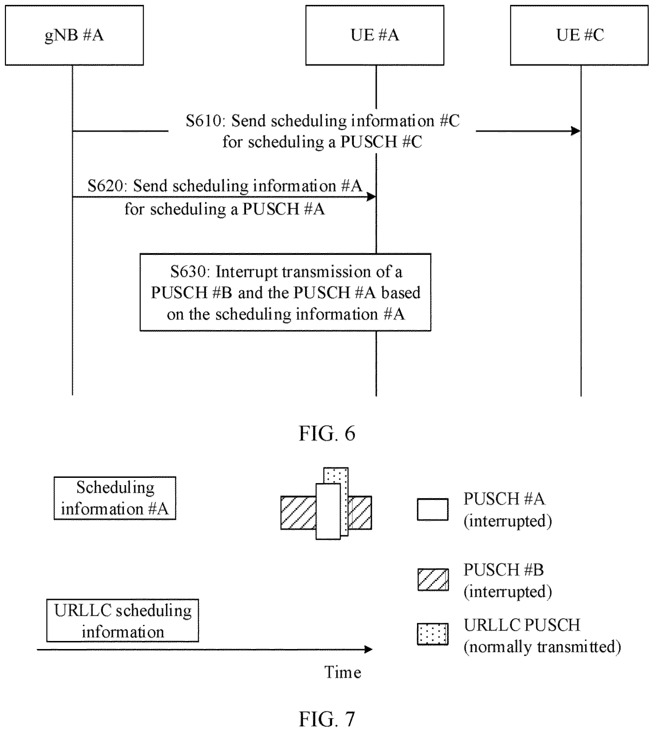

Specifically, as shown in FIG. 6, in S610, the gNB #A may send scheduling information #C to UE #C in a time period #A.

The UE #C and the UE #A are different UEs. This is not particularly limited in this application.

As an example instead of a limitation, the scheduling information #C may be a UL grant.

As an example instead of a limitation, the scheduling information #C may be carried in DCI.

The scheduling information #C may be scheduling information for transmission of a PUSCH #C performed by the UE #C.

For example, the scheduling information #C may be used to indicate a time-frequency resource corresponding to the PUSCH #C (namely, a time-frequency resource #C).

As an example instead of a limitation, the scheduling information #C may indicate a size and position of the time-frequency resource #C. For example, the scheduling information #C may indicate a time domain size and time domain position of the time-frequency resource #C. For another example, the scheduling information #C may indicate a frequency domain size and frequency domain position of the time-frequency resource #C.

In this embodiment of this application, transmission of an uplink channel may be transmission of data or information carried on the uplink channel. The data or information may be data obtained after channel coding or information obtained after channel coding.

As an example instead of a limitation, the PUSCH #C may be used to transmit, for example, a URLLC service.

To avoid interference caused by transmission of a PUSCH #B performed by the UE #A to transmission of the URLLC service, in S620, the gNB #A may send scheduling information #A to the UE #A.

Optionally, a time-frequency resource #A corresponding to a PUSCH #A scheduled based on the scheduling information #A may be the same as the time-frequency resource #C.

In S630, the UE #A may interrupt transmission of the PUSCH #B based on the scheduling information #A. A procedure of S620 may be similar to the procedure of S210, and a procedure of S630 may be similar to the procedure of S220. To avoid repetition, details are not described herein.

In addition, transmission of the PUSCH #B may be uplink transmission scheduled by the gNB #A for the UE #A, or transmission of the PUSCH #B may be uplink transmission performed by the UE #A in, for example, a scheduling-free mode.

It should be noted that, in this case, PUSCHs whose transmission needs to be interrupted as indicated by the scheduling information #A (namely, PUSCHs #B) may be PUSCHs, where a time-frequency resource corresponding to each of the PUSCHs overlaps the time-frequency resource #A.

In addition, in this case, the scheduling information #A is further used to indicate the UE #A to interrupt (or cancel) transmission of the PUSCH #A.

It should be understood that the foregoing enumerated transmission procedure for the PUSCH is merely an example of uplink transmission to which the communication method in this application is applicable. This application is not limited thereto. For example, the uplink transmission may further include transmission of a PUCCH (for example, a HARQ-ACK, CSI, or an SR), an SRS, and the like.

For example, FIG. 7 is a schematic diagram of an example of resource scheduling in Case 2 according to this application. As shown in FIG. 7, a resource for a PUSCH #B may be a grant-free resource. That is, a difference from resource scheduling shown in FIG. 4 is that scheduling information does not need to be used to indicate the resource for the PUSCH #B.

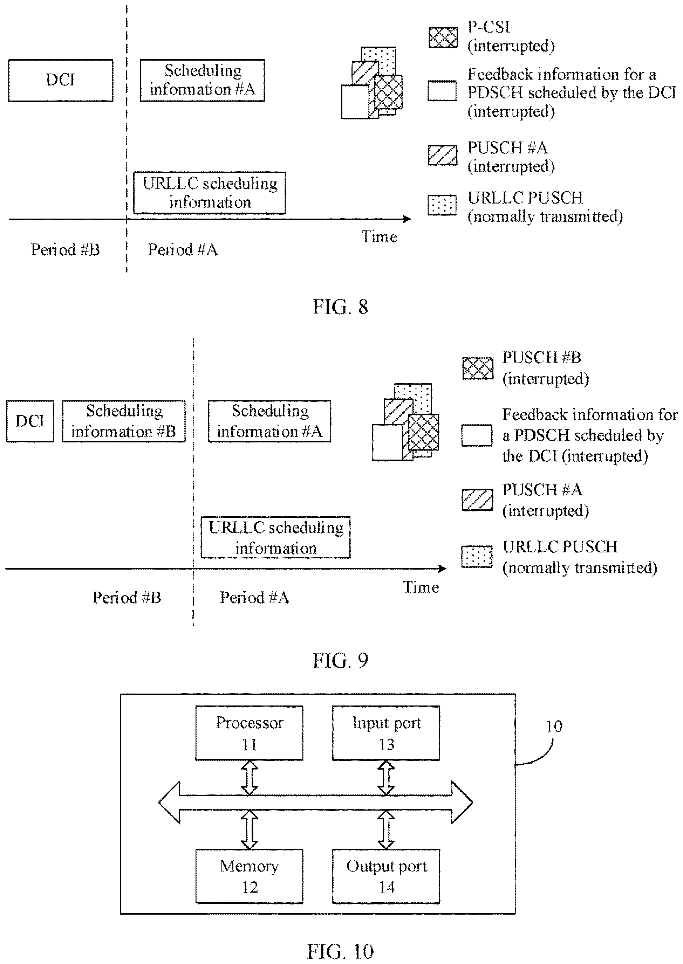

For another example, FIG. 8 is a schematic diagram of another example of resource scheduling in Case 2 according to this application. As shown in FIG. 8, interrupted transmission may include all transmission whose resource overlaps a resource indicated by scheduling information #A. For example, the transmission may include transmission of periodic channel state information (periodic channel state information, P-CSI), transmission of feedback information for a PDSCH scheduled based on DCI, and transmission of a PUSCH #A scheduled based on the scheduling information #A.

FIG. 9 is a schematic diagram of still another example of resource scheduling in Case 2 according to this application. As shown in FIG. 9, interrupted transmission may include all transmission whose resource overlaps a resource indicated by scheduling information #A. For example, the transmission may include transmission of a PUSCH #B scheduled based on scheduling information #B, transmission of feedback information for a PDSCH scheduled based on DCI, and transmission of a PUSCH scheduled based on the scheduling information #A.

According to the communication method in this application, when a gNB determines that a time-frequency resource #1 needs to be used to transmit a service #1, the gNB may send scheduling information to UE that accesses a service #2. The scheduling information may be used to indicate the UE to interrupt uplink transmission on a time-frequency resource #2, where the time-frequency resource #2 and the time-frequency resource #1 have an overlapping part. Therefore, interference to transmission of the service #1 can be avoided, and communication accuracy and reliability can be improved.

According to the foregoing method, FIG. 10 is a schematic diagram 1 of a communications apparatus 10 according to an embodiment of this application. As shown in FIG. 10, the communications apparatus 10 may be a terminal device (for example, the UE #A), or may be a chip or circuit, for example, a chip or circuit that may be disposed in a terminal device. The terminal device may correspond to the terminal device in the foregoing method.

The communications apparatus 10 may include a processor 11 (an example of a processing unit) and a memory 12. The memory 12 is configured to store an instruction. The processor 11 is configured to execute the instruction stored in the memory 12, to enable the apparatus 10 to implement the steps performed by the terminal device (for example, the UE #A) in the corresponding method shown in FIG. 2.

The communications apparatus 10 may further include an input port 13 (an example of a communications unit) and an output port 14 (another example of the communications unit). Further, the processor 11, the memory 12, the input port 13, and the output port 14 may communicate with each other through an internal connection path, to transmit a control signal and/or a data signal. The memory 12 is configured to store a computer program. The processor 11 may be configured to invoke the computer program from the memory 12 and run the computer program, to control the input port 13 to receive a signal and control the output port 14 to send a signal, to complete the steps performed by the terminal device in the foregoing method. The memory 12 may be integrated into the processor 11, or may be separated from the processor 11.

Optionally, if the communications apparatus 10 is the terminal device, the input port 13 is a receiver, and the output port 14 is a transmitter. The receiver and the transmitter may be a same physical entity or different physical entities. When the receiver and the transmitter are a same physical entity, the receiver together with the transmitter may be referred to as a transceiver.

Optionally, if the communications apparatus 10 is the chip or circuit, the input port 13 is an input interface, and the output port 14 is an output interface.

In an implementation, functions of the input port 13 and the output port 14 may be implemented by using a transceiver circuit or a dedicated transceiver chip. The processor 11 may be implemented by using a dedicated processing chip, processing circuit, or processor, or a general-purpose chip.

In another implementation, the terminal device provided in this embodiment of this application may be implemented by using a general-purpose computer. To be specific, program code for implementing functions of the processor 11, the input port 13, and the output port 14 is stored in the memory 12, and a general-purpose processor executes the code in the memory 12, to implement the functions of the processor 11, the input port 13, and the output port 14.

In this embodiment of this application, the input port 13 is configured to receive first scheduling information for scheduling first uplink transmission, where the first scheduling information is used to indicate the terminal device to interrupt second uplink transmission. The processor 11 is configured to interrupt the second uplink transmission based on the first scheduling information.

Optionally, the first scheduling information includes interruption indication information, where the interruption indication information is used to indicate the terminal device to interrupt the second uplink transmission; and the processor 11 is specifically configured to interrupt the second uplink transmission based on the interruption indication information.

Optionally, the first scheduling information includes an interruption indication field carrying the interruption indication information, and the processor 11 is specifically configured to interrupt the second uplink transmission when a bit sequence in the interruption indication field is a first sequence, where the first sequence is a bit sequence corresponding to the interruption indication information.

Optionally, the first sequence is a predefined bit sequence.

Optionally, the first sequence is a bit sequence indicated by a network device.

Optionally, the processor 11 is specifically configured to: interrupt the second uplink transmission when determining that a value of a first transmission parameter indicated by the first scheduling information meets a first condition.

Optionally, the first transmission parameter includes at least one of the following parameters: a hybrid automatic repeat request HARQ identifier ID, a new data indicator NDI, a modulation and coding scheme MCS, a redundancy version RV identifier ID, and a bit in a channel state information CSI request field.

Optionally, the first condition is that a value of the first transmission parameter that is of the first uplink transmission and that is indicated by the first scheduling information is the same as a value of a first transmission parameter of the second uplink transmission.

Optionally, the first condition is that the first transmission parameter that is of the first uplink transmission and that is indicated by the first scheduling information has a predefined value.

Optionally, the first condition is that the first transmission parameter that is of the first uplink transmission and that is indicated by the first scheduling information has a value pre-indicated by the network device.

When a first time-frequency resource corresponding to the first uplink transmission does not overlap a second time-frequency resource corresponding to the second uplink transmission, the processor 11 is further configured to: control, based on the first scheduling information, the input port 13 and the output port 14 to perform the first uplink transmission on the first time-frequency resource.

When a first time-frequency resource corresponding to the first uplink transmission overlaps a second time-frequency resource corresponding to the second uplink transmission, the first scheduling information is further used to indicate the terminal device to interrupt the first uplink transmission.

Optionally, the second uplink transmission includes uplink transmission whose first transmission parameter is the same as the first transmission parameter of the first uplink transmission.

Optionally, the second uplink transmission includes uplink transmission scheduled based on a last piece of scheduling information that the terminal device receives before receiving the first scheduling information.

Optionally, the second uplink transmission includes uplink transmission scheduled based on all pieces of scheduling information that the terminal device receives before receiving the first scheduling information.

Optionally, the second uplink transmission includes uplink transmission, where a time-frequency resource corresponding to the uplink transmission and the first time-frequency resource corresponding to the first uplink transmission have an overlapping part.

The foregoing enumerated functions and actions of the modules or units in the communications apparatus 10 are merely examples for description. The modules or units in the communications apparatus 10 may be configured to perform actions or processing procedures performed by the terminal device in the foregoing method. To avoid repetition, details are not described herein again.

For concepts, explanations, and detailed descriptions used by the apparatus 10 and related to the technical solutions provided in the embodiments of this application and other steps, refer to the descriptions of the content in the foregoing method or other embodiments. Details are not described herein again.

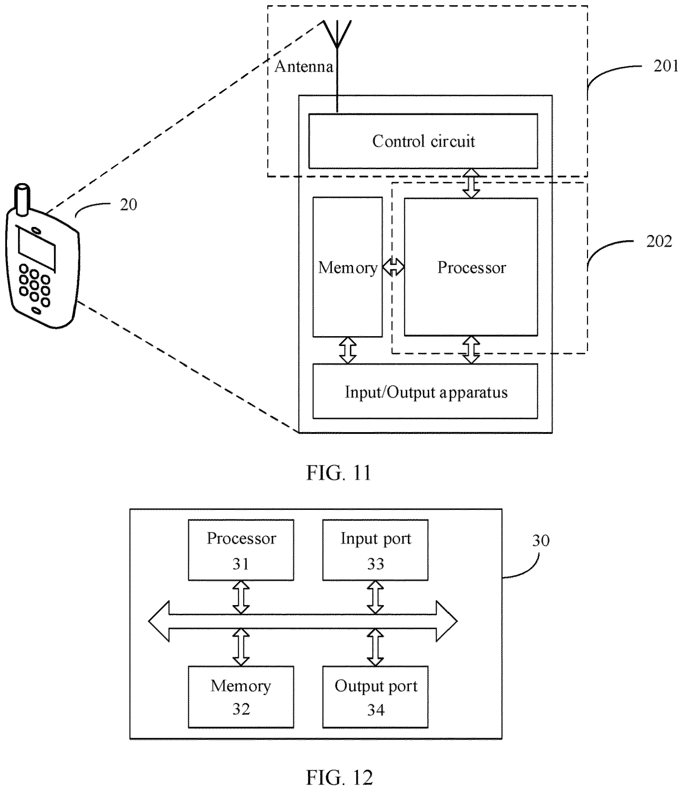

FIG. 11 is a schematic structural diagram of a terminal device 20 according to this application. For ease of description, FIG. 11 shows only main components of the terminal device 20. As shown in FIG. 11, the terminal device 20 includes a processor, a memory, a control circuit, an antenna, and an input/output apparatus.

The processor is mainly configured to: process a communications protocol and communication data, control the entire terminal device, execute a software program, and process data of the software program. For example, the processor is configured to support the terminal device in performing the actions described in the foregoing embodiments of the foregoing method. The memory is mainly configured to store the software program and the data, for example, store the codebook described in the foregoing embodiments. The control circuit is mainly configured to: perform conversion between a baseband signal and a radio frequency signal, and process the radio frequency signal. A combination of the control circuit and the antenna may be referred to as a transceiver, mainly configured to send and receive a radio frequency signal in an electromagnetic wave form. The input/output apparatus such as a touchscreen, a display screen, or a keyboard, is mainly configured to receive data input by a user and output data to the user.

After the terminal device is powered on, the processor may read a software program in the memory, interpret and execute an instruction of the software program, and process data of the software program. When data needs to be sent in a wireless manner, the processor performs baseband processing on the to-be-sent data, and outputs a baseband signal to a radio frequency circuit. The radio frequency circuit performs radio frequency processing on the baseband signal, and sends a radio frequency signal in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 11 shows only one memory and only one processor. An actual terminal device may have a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communications protocol and the communication data. The central processing unit is mainly configured to: control the entire terminal device, execute the software program, and process the data of the software program. The processor in FIG. 11 integrates functions of the baseband processor and the central processing unit. The person skilled in the art may understand that, the baseband processor and the central processing unit may be individually separate processors, and are interconnected by using a technology such as a bus. The person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communications protocol and the communication data may be embedded into the processor, or may be stored in the memory in a form of a software program. The processor executes the software program to implement a baseband processing function.

For example, in this embodiment of this application, the antenna having a transceiver function and the control circuit may be considered as a transceiver unit 201 of the terminal device 20, and the processor having a processing function may be considered as a processing unit 202 of the terminal device 20. As shown in FIG. 11, the terminal device 20 includes the transceiver unit 201 and the processing unit 202. The transceiver unit may also be referred to as a transceiver, a transceiver, apparatus, or the like. Optionally, a component that is in the transceiver unit 201 and that is configured to implement a receiving function may be considered as a receiving unit, and a component that is in the transceiver unit 201 and that is configured to implement a sending function may be considered as a sending unit. In other words, the transceiver unit 201 includes the receiving unit and the sending unit. For example, the receiving unit may also be referred to as a receiver, a receive circuit, or the like, and the sending unit may be referred to as a transmitter, a transmit circuit, or the like.

According to the foregoing method, FIG. 12 is a schematic diagram 2 of a communications apparatus 30 according to an embodiment of this application. As shown in FIG. 12, the communications apparatus 30 may be a network device (for example, the gNB #A), or may be a chip or circuit, for example, a chip or circuit that may be disposed in a network device. The network device corresponds to the network device (for example, the gNB #A) in the foregoing method.

The apparatus 30 may include a processor 31 (an example of a processing unit) and a memory 32. The memory 32 is configured to store an instruction. The processor 31 is configured to execute the instruction stored in the memory 32, to enable the apparatus 30 to implement the steps performed by the network device (for example, the gNB #A) in the foregoing method.

Further, the apparatus 30 may further include an input port 33 (an example of a communications unit) and an output port 34 (another example of the communications unit).

Still further, the processor 31, the memory 32, the input port 33, and the output port 34 may communicate with each other through an internal connection path, to transmit a control signal and/or a data signal.

In another implementation, the network device provided in this embodiment of this application may be implemented by using a general-purpose computer. To be specific, program code that is used to implement functions of the processor 31, the input port 33, and the output port 34 is stored in the memory 32, and a general-purpose processor executes the code in the memory 32 to implement the functions of the processor 31, the input port 33, and the output port 34.

The memory 32 is configured to store a computer program. The processor 31 may be configured to: invoke the computer program from the memory 32 and run the computer program, to generate first scheduling information for scheduling first uplink transmission, where the first scheduling information is used to indicate a terminal device to interrupt second uplink transmission; and control the output port 34 to send the first scheduling information to the terminal device.

Optionally, the first scheduling information includes interruption indication information, where the interruption indication information is used to indicate the terminal device to interrupt the second uplink transmission.

Optionally, the first scheduling information includes an interruption indication field carrying the interruption indication information, and the processor 31 is specifically configured to include a first sequence in the interruption indication field, where the first sequence is a bit sequence corresponding to the interruption indication information.

Optionally, the first sequence is a predefined bit sequence.

Optionally, the first sequence is a bit sequence indicated by the network device.

Optionally, the processor 31 is further configured to configure a value of a first transmission parameter indicated by the first scheduling information to meet a first condition.

Optionally, the first transmission parameter includes at least one of the following parameters: a hybrid automatic repeat request HARQ identifier ID, a new data indicator NDI, a modulation and coding scheme MCS, a redundancy version RV identifier ID, and a bit in a channel state information CSI request field.

Optionally, the first condition is that the value of the first transmission parameter indicated by the first scheduling information is the same as a value of a first transmission parameter of the second uplink transmission.

Optionally, the first condition is that the first transmission parameter indicated by the first scheduling information has a predefined value.

Optionally, the first condition is that the first transmission parameter indicated by the first scheduling information has a value pre-indicated by the network device.

When a first time-frequency resource corresponding to the first uplink transmission does not overlap a second time-frequency resource corresponding to the second uplink transmission, the processor 31 is further configured to: control, based on the first scheduling information, the input port 33 and the output port 34 to perform the first uplink transmission on the first time-frequency resource.

When a first time-frequency resource corresponding to the first uplink transmission overlaps a second time-frequency resource corresponding to the second uplink transmission, the first scheduling information is further used to indicate the terminal device to interrupt the first uplink transmission.

Optionally, the second uplink transmission includes uplink transmission whose first transmission parameter is the same as a first transmission parameter of the first uplink transmission.

Optionally, the second uplink transmission includes uplink transmission scheduled based on a last piece of scheduling information that the terminal device receives before receiving the first scheduling information.

Optionally, the second uplink transmission includes uplink transmission scheduled based on all pieces of scheduling information that the terminal device receives before receiving the first scheduling information.

Optionally, the second uplink transmission includes uplink transmission, where a time-frequency resource corresponding to the uplink transmission and the time-frequency resource corresponding to the first uplink transmission have an overlapping part.

The foregoing enumerated functions and actions of the modules or units in the communications apparatus 30 are merely examples for description. The modules or units in the communications apparatus 30 may be configured to perform actions or processing procedures performed by the network device (for example, the gNB #A) in the foregoing method. To avoid repetition, details are not described herein again.

For concepts, explanations, and detailed descriptions used by the apparatus 30 and related to the technical solutions provided in the embodiments of this application and other steps, refer to the descriptions of the content in the foregoing method or other embodiments. Details are not described herein again.

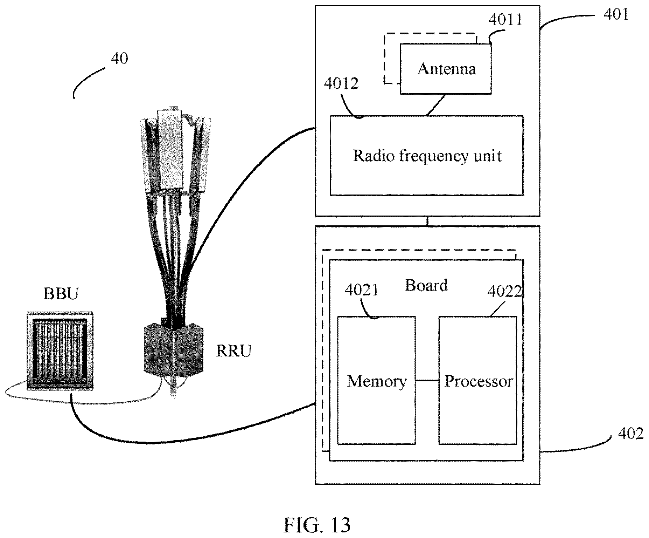

FIG. 13 is a schematic diagram of a structure of a network device 40 according to an embodiment of this application. The network device 40 may be configured to implement functions of the network device (for example, an access network device #A or a core network device #α) in the foregoing method. The network device 40 includes one or more radio frequency units, such as a remote radio unit (remote radio unit, RRU) 401 and one or more baseband units (baseband unit, BBU) (which may also be referred to as a digital unit, digital unit, DU) 402. The RRU 401 may be referred to as a transceiver unit, a transceiver, a transceiver circuit, or the like, and may include at least one antenna 4011 and a radio frequency unit 4012. The RRU 401 is mainly configured to: receive and send a radio frequency signal, and perform conversion between a radio frequency signal and a baseband signal. For example, the RRU 401 is configured to send the signaling message in the foregoing embodiments to a terminal device. The BBU 402 is mainly configured to: perform baseband processing, control the base station, and so on. The RRU 401 and the BBU 402 may be physically disposed together; or may be physically disposed separately, that is, the network device 40 is a distributed base station.

The BBU 402 is a control center of a base station, may also be referred to as a processing unit, and is mainly configured to implement a baseband processing function, for example, channel coding, multiplexing, modulation, and spreading. For example, the BBU (the processing unit) 402 may be configured to control the base station 40 to perform the operation procedure related to the network device in the method embodiments.

In an example, the BBU 402 may include one or more boards. A plurality of boards may jointly support a radio access network (for example, an LTE system or a 5G system) of a single access standard, or may respectively support radio access networks of different access standards. The BBU 402 further includes a memory 4021 and a processor 4022. The memory 4021 is configured to store a necessary instruction and necessary data. For example, the memory 4021 stores the codebook and the like in the foregoing embodiments. The processor 4022 is configured to control the base station to perform a necessary action. For example, the processor 4022 is configured to control the base station to perform the operation procedure related to the network device in the foregoing method embodiments. The memory 4021 and the processor 4022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (System-on-chip, SoC) technology, all or some functions of the components 402 and 401 may be implemented by using the SoC technology, for example, by using one base station function chip. The base station function chip integrates components such as a processor, a memory, and an antenna port. A program of a base station-related function is stored in the memory. The processor executes the program to implement the base station-related function. Optionally, the base station function chip can also read a memory outside the chip to implement the base station-related function.

It should be understood that a structure of the network device shown in FIG. 13 is merely a possible form, but should not constitute any limitation to this embodiment of this application. This application does not exclude a possibility that there may be a base station structure in another form in the future.

According to the method provided in the embodiments of this application, an embodiment of this application further provides a communications system. The communications system includes the foregoing network device and one or more terminal devices.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logical device, a discrete gate or a transistor logical device, a discrete hardware component, or the like. The general-purpose processor may be a microprocessor, or the processor may be any conventional processor or the like.

It should be further understood that, the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. As an example instead of a limitation, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that, the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by the person skilled in the art that, for the purpose of convenient and brief description, for a detailed working procedure of the foregoing system, apparatus, and unit, refer to a corresponding procedure in the foregoing method embodiments, and details are not described herein again. In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate. Parts displayed as units may or may not be physical units, in other words, may be located in one position or may be distributed on a plurality of network units. Some or all of the units may be selected based on actual requirements to achieve the objectives of the solutions of the embodiments. In addition, functional units in the embodiments of this application may be integrated into one processing unit, or each of the units may exist alone physically, or two or more units may be integrated into one unit. When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A communication method, comprising:
receiving (S310), by a terminal device (116, 122, 20), at a first time period (#B) first scheduling information (#B) for scheduling first uplink transmission (PUSH#B) sent by a network device (102);
transmitting, by the terminal device (116, 122, 20), a first service using the scheduled first uplink transmission (PUSH#B);
receiving (S320), by the terminal device (116, 122, 20), at a second time period (#A) after the first time period (#B), second scheduling information (#A) for scheduling second uplink transmission (PUSH#A) sent by the network device (102), wherein the second scheduling information comprises interruption indication information, and the interruption indication information is used to indicate the terminal device (116, 122, 20) to interrupt the first uplink transmission (PUSH#B) and the terminal device (116, 122, 20) interrupts the second uplink transmission (PUSH#A) based on the interruption indication information; and
interrupting (S330), by the terminal device (116, 122, 20), the first uplink transmission (PUSH#B) based on the interruption indication information; and
**characterized in that**
when a second time-frequency resource to be transmitted using the second uplink transmission (PUSH#A) overlaps the first time-frequency resource transmitted using the first uplink transmission (PUSH#B), the interruption indication information is further used to indicate the terminal device (116, 122, 20) to interrupt the second uplink transmission (PUSH#A); and
when the second time-frequency resource to be transmitted using the second uplink transmission (PUSH#A) does not overlap the first time-frequency resource transmitted using the first uplink transmission (PUSH#B), the method further comprises:
performing, by the terminal device (116, 122, 20), the second uplink transmission (PUSH#A) based on the second scheduling information.

2. The communication method according to claim 1, wherein the second scheduling information (#A) comprises an interruption indication field carrying the interruption indication information, and
the interrupting (S330), by the terminal device (116, 122, 20), the first uplink transmission (#B) based on the interruption indication information comprises:
interrupting, by the terminal device (116, 122, 20), the first uplink transmission (#B) when determining that a bit sequence in the interruption indication field is a first sequence, wherein the first sequence is a bit sequence corresponding to the interruption indication information.

3. The communication method according to claim 2, wherein the first sequence is a predefined bit sequence; or
the first sequence is a bit sequence indicated by the network device (102).

4. The communication method according to any one of claims 1 to 3, wherein a first transmission parameter of the second uplink transmission is the same as a first transmission parameter of the first uplink transmission; or
the first uplink transmission is uplink transmission scheduled based on a last piece of scheduling information that the terminal device (116, 122, 20) receives before receiving the second scheduling information; or
the first uplink transmission is uplink transmission scheduled based on all pieces of scheduling information that the terminal device (116, 122, 20) receives before receiving the second scheduling information; or
the second time-frequency resource and the first time-frequency resource have an overlapping part.

5. The communication method according to claim 4, wherein the first transmission parameter of the second uplink transmission or the first transmission parameter of the first uplink transmission comprises one or more of the following parameters:
a hybrid automatic repeat request, HARQ, identifier, ID, a new data indicator, NDI, a modulation and coding scheme, MCS, a redundancy version, RV, identifier ID, and a bit in a channel state information, CSI, request field.

6. A communications device, comprising means for performing the method according to any of claims 1 to 5.

7. A computer-readable storage medium, wherein the computer-readable storage medium stores a computer program, and when the computer program is run on a computer, the computer is enabled to:
perform the communication method according to any one of claims 1 to 5.

## Patentansprüche

1. Kommunikationsverfahren, umfassend:
Empfangen (S310) durch eine Endgerätevorrichtung (116, 122, 20) zu einem ersten Zeitpunkt (#B) von ersten Planungsinformationen (#B) zum Planen einer ersten Uplink-Übertragung (PUSH#B), die von einer Netzwerkvorrichtung (102) gesendet wird;
Übertragen eines ersten Dienstes durch die Endgerätevorrichtung (116, 122, 20) unter Verwendung der geplanten ersten Uplink-Übertragung (PUSH#B);
Empfangen (S320) durch die Endgerätevorrichtung (116, 122, 20) zu einem zweiten Zeitpunkt (#A) nach dem ersten Zeitpunkt (#B) von zweiten Planungsinformationen (#A) zum Planen der zweiten Uplink-Übertragung (PUSH#A), die von der Netzwerkvorrichtung (102) gesendet wird, wobei die zweiten Planungsinformationen Unterbrechungsangabeformationen umfassen und die Unterbrechungsangabeinformationen verwendet werden, um der Endgerätevorrichtung (116, 122, 20) anzugeben, dass es die erste Uplink-Übertragung unterbrechen soll (PUSH#B), und dass die Endgerätevorrichtung (116, 122, 20) die zweite Uplink-Übertragung (PUSH#A) auf der Grundlage der Unterbrechungsangabeinformationen unterbricht; und
Unterbrechen (S330) der ersten Uplink-Übertragung (PUSH#B) durch die Endgerätevorrichtung (116, 122, 20) auf der Grundlage der Unterbrechungsabgabeinformationen; und
**dadurch gekennzeichnet, dass**
wenn eine zweite Zeit-Frequenz-Ressource, die unter Verwendung der zweiten Uplink-Übertragung (PUSH#A) übertragen werden soll, die erste Zeit-Frequenz-Ressource überlappt, die unter Verwendung der ersten Uplink-Übertragung (PUSH#B) übertragen wird, die Unterbrechungsanzeigeinformationen ferner verwendet werden, um der Endgerätevorrichtung (116, 122, 20) anzugeben, dass die zweite Uplink-Übertragung (PUSH#A) unterbrochen werden soll; und
wenn die zweite Zeit-Frequenz-Ressource, die unter Verwendung der zweiten Uplink-Übertragung (PUSH#A) übertragen werden soll, die erste Zeit-Frequenz-Ressource, die unter Verwendung der ersten Uplink-Übertragung (PUSH#B) übertragen werden soll, nicht überlappt, das Verfahren ferner Folgendes umfasst:
Durchführen der zweiten Uplink-Übertragung (PUSH#A) durch die Endgerätevorrichtung (116, 122, 20) auf der Grundlage der zweiten Planungsinformationen.

2. Kommunikationsverfahren nach Anspruch 1, wobei die zweite Planungsinformation (#A) ein Unterbrechungsangabefeld umfasst, das die Unterbrechungsangabeinformation trägt, und
das Unterbrechen (S330) der ersten Uplink-Übertragung (#B) durch die Endgerätevorrichtung (116, 122, 20) auf der Grundlage der Unterbrechungsangabeformationen umfasst:
Unterbrechen der ersten Uplink-Übertragung (#B) durch die Endgerätevorrichtung (116, 122, 20), wenn festgestellt wird, dass eine Bitfolge im Unterbrechungsangabefeld eine erste Sequenz ist, wobei die erste Sequenz eine Bitfolge ist, die den Unterbrechungsangabeinformationen entspricht.

3. Kommunikationsverfahren nach Anspruch 2, wobei die erste Sequenz eine vordefinierte Bitsequenz ist; oder
die erste Sequenz eine von der Netzwerkvorrichtung (102) angezeigte Bitsequenz ist.

4. Kommunikationsverfahren nach einem der Ansprüche 1 bis 3, wobei ein erster Übertragungsparameter der zweiten Uplink-Übertragung derselbe ist wie ein erster Übertragungsparameter der ersten Uplink-Übertragung; oder
die erste Uplink-Übertragung eine Uplink-Übertragung ist, die auf der Grundlage eines letzten Stücks der Planungsinformation geplant wird, die die Endgerätevorrichtung (116, 122, 20) empfängt, bevor sie die zweite Planungsinformation empfängt; oder
die erste Uplink-Übertragung eine Uplink-Übertragung ist, die auf der Grundlage aller Stücke der Planungsinformationen geplant wird, die die Endgerätevorrichtung (116, 122, 20) empfängt, bevor sie die zweite Planungsinformation empfängt; oder
die zweite Zeit-Frequenz-Ressource und die erste Zeit-Frequenz-Ressource einen überlappenden Teil aufweisen.

5. Kommunikationsverfahren nach Anspruch 4, wobei der erste Übertragungsparameter der zweiten Uplink-Übertragung oder der erste Übertragungsparameter der ersten Uplink-Übertragung einen oder mehrere der folgenden Parameter umfasst:
eine hybride automatische Wiederholungsanforderung (HARQ), Kennung (ID), ein neuer Datenindikator (NDI), ein Modulations- und Codierungsschema (MCS), eine Redundanzversion (RV), Kennung (ID) und ein Bit in einem Anforderungsfeld für Kanalzustandsinformationen (CSI).

6. Kommunikationsvorrichtung, das Mittel zum Durchführen des Verfahrens nach einem der Ansprüche 1 bis 5 umfasst.

7. Computerlesbares Speichermedium, wobei das computerlesbare Speichermedium ein Computerprogramm speichert, und wenn das Computerprogramm auf einem Computer ausgeführt wird, der Computer zu Folgendem in der Lage ist:
Durchführen des Kommunikationsverfahrens nach einem der Ansprüche 1 bis 5.

## Revendications

1. Procédé de communication, comprenant :
la réception (S310), par un dispositif terminal (116, 122, 20), à une première période de temps (#B), de premières informations de planification (#B) pour planifier une première transmission de liaison montante (PUSH#B) envoyées par un dispositif réseau (102) ;
la transmission, par le dispositif terminal (116, 122, 20), d'un premier service à l'aide de la première transmission de liaison montante planifiée (PUSH#B) ;
la réception (S320), par le dispositif terminal (116, 122, 20), à une seconde période de temps (#A) après la première période de temps (#B), de secondes informations de planification (#A) pour planifier une seconde transmission de liaison montante (PUSH#A) envoyées par le dispositif réseau (102), dans lequel les secondes informations de planification comprennent des informations d'indication d'interruption, et les informations d'indication d'interruption sont utilisées pour indiquer au dispositif terminal (116, 122, 20) d'interrompre la première transmission de liaison montante (PUSH#B) et le dispositif terminal (116, 122, 20) interrompt la seconde transmission de liaison montante (PUSH#A) sur la base des informations d'indication d'interruption ; et
l'interruption (S330), par le dispositif terminal (116, 122, 20), de la première transmission de liaison montante (PUSH#B) sur la base des informations d'indication d'interruption ; et
**caractérisé en ce que**
lorsqu'une seconde ressource temps-fréquence à transmettre à l'aide de la seconde transmission de liaison montante (PUSH#A) chevauche la première ressource temps-fréquence transmise à l'aide de la première transmission de liaison montante (PUSH#B), les informations d'indication d'interruption sont en outre utilisées pour indiquer au dispositif terminal (116, 122, 20) d'interrompre la seconde transmission de liaison montante (PUSH#A) ; et
lorsque la seconde ressource temps-fréquence à transmettre à l'aide de la seconde transmission de liaison montante (PUSH#A) ne chevauche pas la première ressource temps-fréquence transmise à l'aide de la première transmission de liaison montante (PUSH#B), le procédé comprend en outre :
l'exécution, par le dispositif terminal (116, 122, 20), de la seconde transmission de liaison montante (PUSH#A) sur la base des secondes informations de planification.

2. Procédé de communication selon la revendication 1, dans lequel les secondes informations de planification (#A) comprennent un champ d'indication d'interruption transportant les informations d'indication d'interruption, et
l'interruption (S330), par le dispositif terminal (116, 122, 20), de la première transmission de liaison montante (#B) sur la base des informations d'indication d'interruption comprend :
l'interruption, par le dispositif terminal (116, 122, 20), de la première transmission de liaison montante (#B) lors de la détermination qu'une séquence de bits dans le champ d'indication d'interruption est une première séquence, dans lequel la première séquence est une séquence de bits correspondant aux informations d'indication d'interruption.

3. Procédé de communication selon la revendication 2, dans lequel la première séquence est une séquence de bits prédéfinie ; ou
la première séquence est une séquence de bits indiquée par le dispositif réseau (102).

4. Procédé de communication selon l'une quelconque des revendications 1 à 3, dans lequel un premier paramètre de transmission de la seconde transmission de liaison montante est le même qu'un premier paramètre de transmission de la première transmission de liaison montante ; ou
la première transmission de liaison montante est une transmission de liaison montante planifiée sur la base d'un dernier élément d'informations de planification que le dispositif terminal (116, 122, 20) reçoit avant de recevoir les secondes informations de planification ; ou
la première transmission de liaison montante est une transmission de liaison montante planifiée sur la base de tous les éléments d'informations de planification que le dispositif terminal (116, 122, 20) reçoit avant de recevoir les secondes informations de planification ; ou
la seconde ressource temps-fréquence et la première ressource temps-fréquence ont une partie qui se chevauche.

5. Procédé de communication selon la revendication 4, dans lequel le premier paramètre de transmission de la seconde transmission de liaison montante ou le premier paramètre de transmission de la première transmission de liaison montante comprend un ou plusieurs des paramètres suivants :
un identifiant, ID, de demande de répétition automatique hybride, HARQ, un nouvel indicateur de données, NDI, un schéma de modulation et de codage, MCS, un identifiant, ID, de version de redondance, RV, et un bit dans un champ de demande d'informations d'état de canal, CSI.

6. Dispositif de communication, comprenant un moyen pour exécuter le procédé selon l'une quelconque des revendications 1 à 5.

7. Support de stockage lisible par ordinateur, dans lequel le support de stockage lisible par ordinateur stocke un programme informatique, et lorsque le programme informatique est exécuté sur un ordinateur, l'ordinateur est activé pour :
exécuter le procédé de communication selon l'une quelconque des revendications 1 à 5.
